# EUROPEAN PATENT APPLICATION

(11) **EP 4 357 321 A1**
(43) Date of publication of application: **24.04.2024**
(21) Application number: 23204557.5
(22) Date of filing: 19.10.2023
(51) Int. Cl.: C05F 11/08, C05F 3/00, C05F 7/00, C05F 9/04

(54) **BIOSTIMULANTS**

(30) Priority: 21.10.2022 IT 202200021792
(71) Applicant: Wrote S.r.l., 20124 Milano (IT)
(72) Inventor: Ovani Invernizzi, Marco Rean, Caravaggio (BG) (IT); Pina, Marco Pierpaolo, Romano di Lombardia (BG) (IT)
(74) Representative: Manfredi, Irene

(57) **Abstract**

The present invention relates to a biostimulant product in solid form, comprising a dried organic matrix and biostimulant microorganisms and a method for the production of said biostimulant product.

## Description

### FIELD OF THE INVENTION

The present invention relates to a biostimulant product in solid form, comprising a dried organic matrix and an inoculum of biostimulant microorganisms selected from: mycorrhizae, fungi, rhizosphere bacteria (rhizobacteria), and mixtures thereof. The invention also relates to a method for the production of said biostimulant product.

### BACKGROUND

Biostimulants are next-generation products used in agriculture to improve crop's health and yield, from planting to harvesting.

They differ from fertilizers in that they do not directly provide nutrients to the plant, but they act by improving and increasing some physiological processes that occur during the life cycle, in particular by increasing the absorption and efficiency of nutrients usage, and tolerance to biotic and abiotic stresses. These biostimulant activities allow to increase crop's production and to improve its quality.

Biostimulants include materials and substances of a heterogeneous nature, including humic and fulvic acids, protein hydrolysates, algae, plant extracts and microorganisms.

Biostimulants are mostly derived from plant-based extraction processes, such as hydrolysates and alfalfa or *Fabaceae extracts.*

Particularly desirable is the production of new biostimulant products according to methods that fall within the so-called circular economy, for example by reusing waste materials or industrial by-products to obtain new products. However, it is necessary that the manufacturing processes of the starting materials do not damage the biostimulant product and in particular any microorganisms present.

The aim of the present invention is therefore to provide a biostimulant product including viable biostimulant microorganisms, which is effective, convenient to use, and which is also economically and ecologically advantageous, being obtainable through circular economy processes.

### SUMMARY OF THE INVENTION

Said aim is achieved by the present invention, which is directed to a biostimulant product in solid form, comprising a dried organic matrix and an inoculum of biostimulant microorganisms selected from: mycorrhizae, fungi, rhizosphere bacteria (rhizobacteria) and mixtures thereof, wherein said organic matrix is a by-product of the livestock industry, such as: manure, digestate, compost, and mixtures thereof.

In a further aspect, the present invention is also directed at a method of production of said biostimulant product from by-products of the livestock industry.

### BRIEF DESCRIPTION OF FIGURES

The characteristics and advantages of the present invention will be evident from the following detailed description, from the embodiments provided as illustrative and non-limiting examples, and from the enclosed figures, wherein:
- Figure 1 shows a graph of the trend of the variables temperature (°C), pressure (cbar), mass (kg) and % of dry matter (%SS) over time, in the reaction chamber where test 4 of Example 1 (A) was conducted and in the reaction chamber where test 5 of Example 2 was conducted; a photograph of the granulated biostimulant obtained at the end of Example 1 is shown in C.

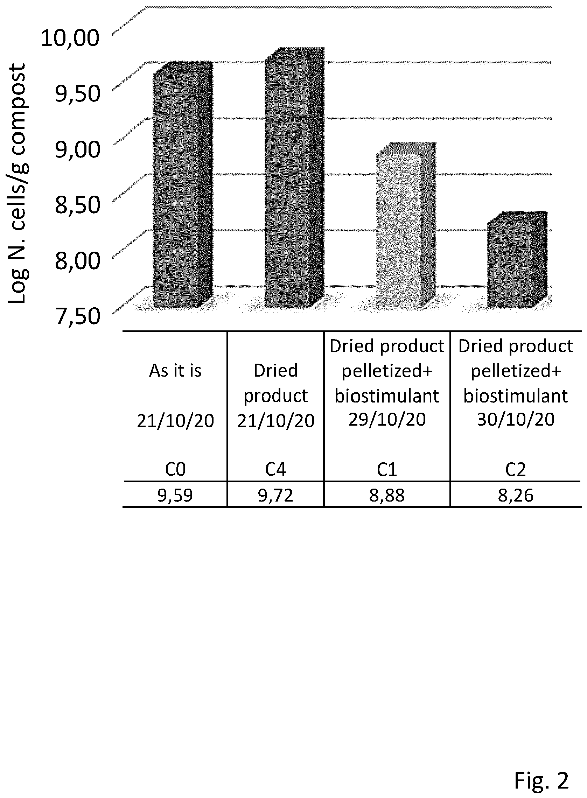

- Figure 2 shows the number of viable bacterial cells per gram of product in the samples of Example 3 (logarithmic scale).
- Figure 3 shows the plates inoculated with the different samples (here C0, C 1, C2, C3 and C4) examined in Example 4, in different culture media (PDA=Potato Dextrose Agar; MEA=Malt Extract Agar; RB= Bengal Rose), after one week of incubation at 24°C.
- Figure 4 shows: on the left a detail of some granules examined in Example 4; on the right, in the circle, an enlargement of a spore (circular element in the center).

### DETAILED DESCRIPTION OF THE INVENTION

The invention concerns a biostimulant product in solid form, comprising a dried organic matrix and an inoculum of biostimulant microorganisms selected from: mycorrhizae, fungi, rhizosphere bacteria and mixtures thereof; wherein said organic matrix is a by-product of the livestock industry, such as: manure, digestate, compost, and mixtures thereof.

According to the present invention, "manure" is defined as the product of the fermentation of farm animal manure (faeces and urine) mixed with solid material used as bedding (straw, sand, sawdust, etc.). According to the present invention, manure can be either fresh, i.e. with less than three months of maturation, or mature, i.e. having a maturation of more than 3 months.

According to the present invention, "digestate" is defined as the product of the process of anaerobic digestion of livestock manure, plant biomass (preferably waste) or animals' by-products (SOA).

Preferably, the organic matrix of the product and method of the present invention is digestate, more preferably a solid fraction of digestate (obtainable by solid-liquid separation of the digestate).

The use of digestate for obtaining the biostimulant product of the invention is particularly advantageous, as it provides an organic matrix that is stabilized and sanitized, as well as enriched in nitrogenous organic substances.

Even more, the use, as an organic matrix, of the solid fraction of digestate, separated from the liquid fraction, allows to optimize the process of obtaining a biostimulant in solid form, reducing, for example, the time and energy necessary for the drying of the organic matrix.

Optionally, said digestate is composted.

Therefore, in particularly preferred aspects of the invention, the organic matrix is compost, more preferably digestate's compost, even more preferably compost of the digestate's solid fraction.

According to the present invention, "compost" is defined as the material obtained from the process of shredding and fermentation (composting) of organic waste deriving from the livestock industry; preferably the compost is used in the present invention after at least 30, at least 60, at least 90 days of maturation. In the case of compost of digestate, or of the solid fraction thereof, the digestate is preferably left to ferment for a time between 30 and 90 days.

According to the present invention, the term "inoculum of microorganisms" is meant to indicate that the biostimulant microorganisms, selected from mycorrhizae, fungi, rhizosphere bacteria and mixtures thereof, are added to the organic matrix; the organic matrix may eventually contain other different microorganisms to which the microorganisms of the inoculum are added.

According to the present invention, the term "microorganisms" also includes their spores. Preferably, the fungi of the biostimulant microorganisms' inoculum are in the form of spores.

According to the present invention, a "dried" organic matrix means an organic matrix having a residual content of moisture not greater than 20%, preferably not greater than 15%, most preferably not greater than 10%.

Accordingly, the biostimulant product of the invention has a residual content of moisture not greater than 20%, preferably not greater than 15%, most preferably not greater than 10%.

Preferably, the dried organic matrix or the biostimulant product have a residual content of moisture of 0-20%, 0.05-15%, 1-13%, 2-12%, or 5-15%.

Residual moisture can be measured by any known method in art, e.g. by gravimetric measurements.

Typically, before drying, the organic matrix has a residual moisture content greater than 30%, preferably greater than 40%, most preferably greater than 50%, and lower than 90%, preferably lower than 80%, most preferably lower than 70%.

The organic matrix of the product of the invention may include one or more of:
- organic carbon, preferably at a concentration of 35-50% by weight on the total weight of the dry matter of the matrix;
- organic nitrogen, preferably at a concentration of 2-5% by weight on the total weight of the dry matter of the matrix;
- ammoniacal nitrogen, preferably at a concentration of 0.01-0.1% by weight on the total weight of the dry matter of the matrix;
- humic and fulvic acids, preferably at a concentration of 5-10% by weight on the total weight of the dry matter of the matrix;
- phosphorus, preferably at a concentration of 1.5-3% by weight on the total weight of the dry matter of the matrix;
- potassium, preferably at a concentration of 1-2% by weight on the total dry matter weight of the matrix.
The organic matrix of the product of the invention may include heavy metals, below the limits established by law.

Surprisingly, the microorganisms that are present in the biostimulant product of the invention, selected from mycorrhizae, fungal spores, rhizosphere bacteria and mixtures thereof, have been shown to be able to remain viable even following heating and/or mechanical treatments of the organic matrix that includes them.

Advantageously, therefore, the product of the invention comprises viable microorganisms.

Preferably, the biostimulant product comprises a content of viable microorganisms of at least 1×10⁴ CFU/g of biostimulant product, preferably 1×10⁴ - 1×10⁶ CFU/g.

The biostimulant product preferably includes a concentration by weight of mycorrhizae of 0.01-1%, preferably of 0.05-0.5%, based on the total weight of the biostimulant product, and/or a content of rhizosphere bacteria and/or of viable fungal spore of 1×10⁴ - 1×10⁶ CFU/g of biostimulant product.

The biostimulant product is preferably in granule form.

Compared to a liquid or powder product, a solid biostimulant product in granule form is more convenient as it reduces management, storage and transport costs. In addition, the granules have greater stability and prolonged bioavailability of the microorganisms contained therein. Finally, in the form of a solid granule, it can advantageously absorb water, such as rainwater, and gradually release it into the soil, improving irrigation and reducing water consumption.

Preferably, the solid biostimulant product of the present invention is not in powder form. Preferably the solid biostimulant product of the present invention, the dried organic matrix, and/or the inoculum of microorganisms, are not freeze-dried.

In preferred aspects of the invention, the inoculum of microorganisms is added to the organic matrix in the form of a liquid composition comprising said microorganisms, prior to drying and/or granulation of the organic matrix.

In the product of the invention, the inoculum of biostimulant microorganisms is incorporated within the organic matrix; in the product of the invention, the inoculum is therefore totally or almost totally incorporated within the product, for example inside the granule, thus not being on the surface, if not minimally; for example, less than 1% of the inoculum is present on the surface of the biostimulant product.

Preferably, the biostimulant product of the invention further includes microorganisms of the organic matrix, such as bacteria, other than the biostimulant microorganisms of the inoculum.

Advantageously, mycorrhizae, fungi and bacteria of the rhizosphere have been shown to be able to remain viable in the biostimulant product, even in the presence of competition with the microorganisms that are originally present in the organic matrix. Particularly preferred, among the biostimulant microorganisms of the product of the invention, are: *Azospirilum Brasilense,* Rhizobium pisi, *Trichoderma viride, Bacillus amyloliquefaciens, Bacillus subtilis, Pseudomonas putida, Bacillus firmus, Trichoderma harzianum, Metarhizium anisopliae, Beauveria bassiana, Pochonia chlamydosporia,* or mixtures thereof. More preferably, the biostimulant product of the invention comprises an inoculum of *Azospirilum Brasilense, Rhizobium pisi, Trichoderma viride,* or mixtures thereof.

Further preferred, among the biostimulant microorganisms of the product of the invention, is *Glomus* spp.

Preferably, said microorganisms are present in the inoculum in the form of spores.

Said microorganisms have a biostimulant efficacy even higher than other microorganisms and remain advantageously viable for longer periods.

Preferably, therefore, the product of the invention comprises an inoculum of *Azospirilum Brasilense, Rhizobium pisi, Trichoderma viride, Glomus* spp., or mixtures thereof.

The present invention is further directed to a method of production of the biostimulant product comprising:
drying an organic matrix selected from: manure (fresh or mature), digestate, compost, and mixtures thereof, and inoculating into said organic matrix microorganisms selected from: mycorrhizae, fungal spores, rhizosphere bacteria and mixtures thereof; optionally granulating the dried organic matrix.

Preferably, the organic matrix is digestate, more preferably a solid fraction of the digestate (obtained after solid-liquid separation), optionally compost of digestate, or a solid fraction thereof.

Preferably, the phase of drying said organic matrix comprises, or consists of, a heat treatment of the matrix, wherein the matrix is heated to a temperature not exceeding 70°C, more preferably to a temperature between 30°C and 70°C, most preferably between 30°C and 65°C, under high vacuum, preferably at a pressure of about 0,2-0,3 bar, more preferably maintained for a portion of the total heat treatment time. For example, heat treatment can last for a total of 2-6 hours, during which cycles of heat treatment under high vacuum, lasting 20-120 minutes, are repeated.

The method of invention is preferably carried out in an automated manner; optionally, the loading and unloading phase of the product may require the intervention of an operator.

In a preferred aspect of the method of the invention, the phase of drying said organic matrix and optionally granulating the dried organic matrix precedes the phase of inoculating the microorganisms into said matrix.

In an alternative preferred aspect of the method of the invention, the phase of inoculating the microorganisms into the organic matrix, precedes the phase of drying and optionally granulating the organic matrix.

Surprisingly, the heat treatment for drying the organic matrix does not deteriorate the biostimulant microorganisms, which remain viable even when inoculated after heat treatment for the matrix drying. In addition, microorganisms are even better incorporated into the organic matrix when inoculated before heat treatment.

Optionally, the phase of inoculating the microorganisms in the organic matrix is simultaneous with the phase of drying, and optionally of granulating, said organic matrix.

For example, the microorganisms can be inoculated before and/or during the phase of drying, and optionally of granulating, the organic matrix, remaining viable in the biostimulant product obtained at the end of the process.

In preferred aspects, the phases of drying and of inoculating the microorganisms into the organic matrix can therefore be carried out simultaneously.

Optionally, the phase of granulating can also be carried out at the same time as the phase of drying the organic matrix and/or of inoculating the microorganisms into it.

The granulation of the organic matrix can be carried out through mechanical stirring.

In fact, advantageously, this granulation method does not adversely affect the viability of the microorganisms inoculated into the dried organic matrix.

On the other hand, the pelletizing processes typically employed in the art to produce solid biostimulant products in pellet form can damage the biostimulant microorganisms, which must therefore be added to the surface of the pellets, typically sprayed.

Advantageously, the heat treatment can be carried out by drying the organic matrix in a reaction chamber heated by a thermal source, e.g. circulated inside a reaction chamber jacket. Preferably, such a thermal source shall be a low-cost thermal source, such as a waste liquid or vapor generated by other plants connected to or close to the reaction chamber.

The invention method allows to obtain the biostimulant product of the invention in a cost-effective and ecological way, using by-products of the livestock industry and reducing the energy costs that are necessary to dry the organic matrix, since drying can take place at low temperatures. In addition, the invention method allows to obtain a biologically active and effective product, moreover with a rapid process.

It is to be understood that all possible combinations of the preferred aspects of the product and process, as indicated above, are described, and therefore similarly preferred. It is also to be understood that all aspects identified as preferred and advantageous for the product, are to be considered equally preferred and advantageous also for the preparation and uses of the same.

Examples of the realization of the present invention are provided hereafter provided for illustrative and not limiting purpose.

### EXAMPLES

### Example 1

30 kg of an organic matrix consisting of compost at 90 days of maturation, with a % of dry organic matter approximately equal to 65%, were supplied.

In a first test (hereinafter referred to as "test 4") the compost was first dried, until it reached a mass of about 21 kg, coinciding with a residual moisture value of 10% and granulated to obtain granules with a diameter of about 1 mm, then an inoculum of biostimulant microorganisms was added, (about 3% by weight on the final weight of the product), comprising mycorrhizae, fungal spores, and rhizosphere bacteria. In particular, the mix of microorganisms contained *spores of Glomus spp, Trichoderma spp, Bacillus amyloliquefaciens, Bacillus subtilis, Bacillus megaterium,* as verified by growth on suitable media.

The drying phase is carried out in a reaction chamber held under a high vacuum and heated in a controlled manner by means of a heating jacket inside which water circulates at a controlled temperature.

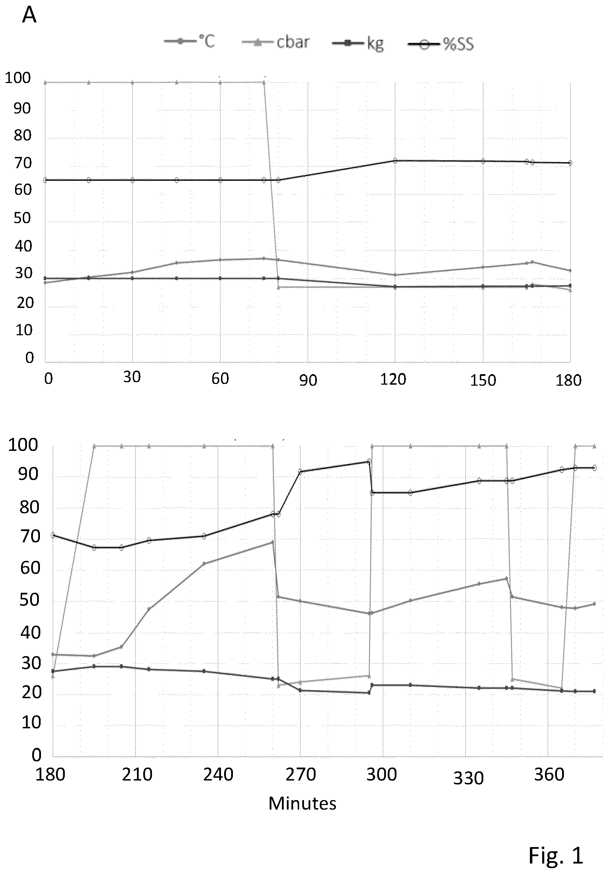

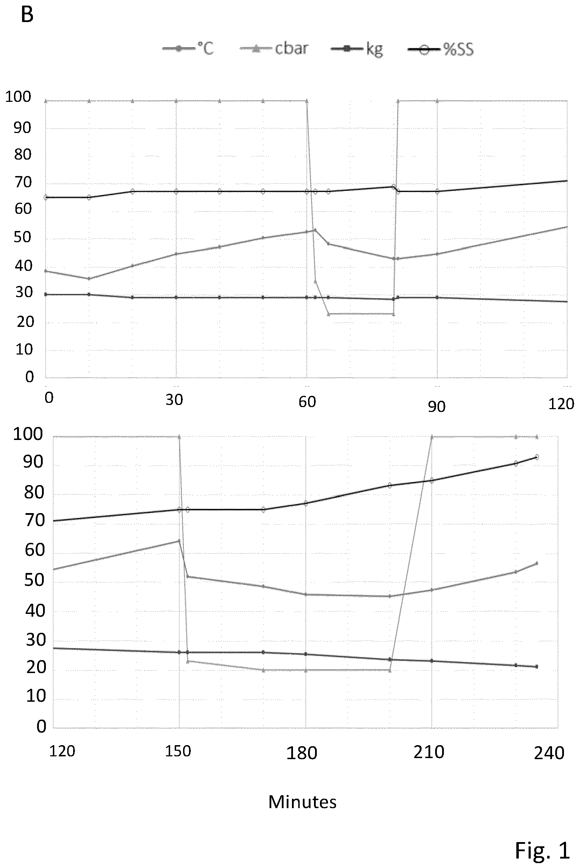

In particular, in test 4 the jacket was heated to 45°C obtaining a temperature inside the chamber below 40°C for the first 180 minutes under vacuum, then the temperature of the heating jacket was increased by introducing water at temperature of 80°C, obtaining a temperature inside the chamber not exceeding 60°C (Figure 1A), alternating treatment cycles at a pressure inside the chamber of about 0.25 bar with treatment cycles at a pressure of about 1 bar.

The inoculation of the microorganisms took place at minute 365 in the dried matrix and for the last 10 minutes of the process the matrix was only stirred without decreasing the pressure or heating further.

At the time of the addition of the microorganisms, the matrix had a temperature of 48°C and a dry matter value of about 90%.

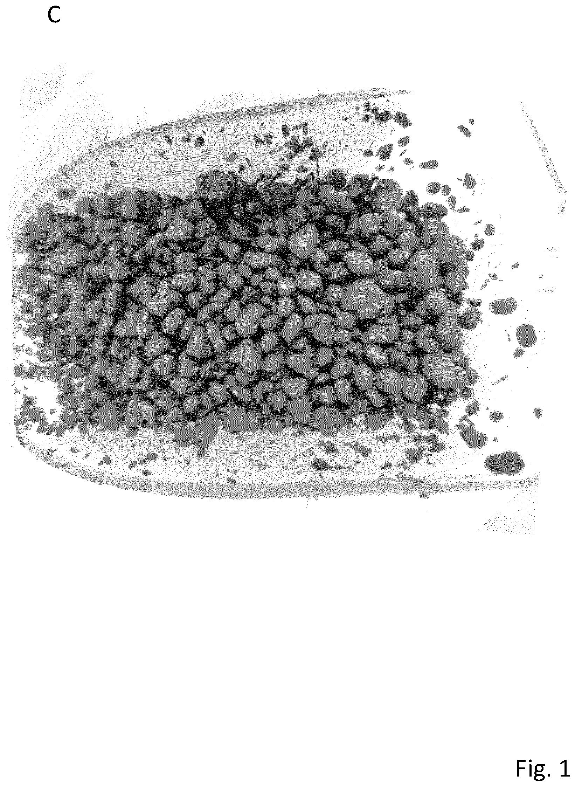

At the end of the mixing, it was possible to see that most of the biostimulant had been incorporated into the granules (Figure 1C).

### Example 2

In a second test (hereinafter referred to as "test 5") the compost at 90 days of maturation, with a % of dry organic matter equal to about 65%, was inoculated with the same biostimulant microorganisms used in Example 1 and in the same quantities, but before starting the drying process. Then the compost comprising the microorganisms was dried in the reaction chamber, heated by introducing water into the jacket at a temperature of 80°C since the beginning of the test, obtaining a temperature of less than 65°C inside the reaction chamber. The dried product was granulated and at the end of the process the granules obtained were homogeneous.

### Example 3

The presence and viability of bacteria was evaluated in the samples shown below in Table 1:

**Table 1**

| **ID** | **Campione** |
|---|---|
| **C0** | Compost 90 days, as it is |
| **C1** | Compost 90 days, dried and granulated + m.o. inoculum (test 4) |
| **C2** | Compost 90 days, dried and granulated + m.o. inoculum (test 5) |
| **C3** | Compost 90 days, dried and granulated |
| **C4** | Compost 90 days, dried |

Samples C1 and C2 are the biostimulant products obtained in Examples 1 and 2 respectively; C0 is the starting organic matrix; C3 is the organic matrix of Example 1dried and granulated, before inoculation of biostimulant microorganisms (m.o.); C4 is the starting organic matrix dried.

All samples were mixed by stirring and handled under a laminar flow biohood in order to avoid any external contamination. All samples were diluted 1:10 in saline solution, with a hydration time of 20 minutes at 25°C. (Mother suspension).

Different dilutions of the parent suspension of the different samples were sown in different agar media, in order to verify the presence and viability of different species of microorganisms.

After culturing in the TSA plate (tryptic soy agar, which supports the growth of bacteria, fungi and molds) it is found that there is no significant change in the number of viable cells (logarithm of the number of cells per gram of sample) between C0 and C4, indicating that drying does not reduce the number of viable microorganisms originally present in the compost. In addition, it is noted that the C2 sample in example 2, in which biostimulant microorganisms are inoculated before drying, also has viable microorganisms.

Surprisingly, despite the high concentration of concomitant flora in the starting organic matrix and in the inoculum of biostimulant microorganisms makes it difficult to distinguish the microbial species present and despite the competition between the different strains of microorganisms, in the C2 sample grown on BCM medium (*Bacillus cereus* agar base, selective for bacilli) forms attributable to the inoculum could be observed, in particular bacilli, as verified by growing the latter on different soils, that were absent in the starting organic matrix, mainly comprising cocci, as demonstrated by the observation of the different cultures (data not shown).

Therefore, even carrying out the heat treatment for drying the organic matrix after inoculation of the microorganisms, bacteria from the rhizosphere remain viable in the final product.

### Example 4

The presence and viability of fungal strains in the samples from Example 3 was also evaluated.

For each sample, an aliquot of 5 g was diluted in 45 ml of sterile deionized water; the initial suspension was then diluted in sterile water by serial dilutions of 1:100 and, finally, 1:1000.

Subsequently, 1 ml of suspension was plated on three different culture media: *Malt Extract Agar* (MEA), *Potato Dextrose Agar* (PDA), Bengal Rose (RB) and the inoculated plates were incubated in the dark at 24 °C, monitored every two days for 10 days. In addition, for further evidence, some additional inoculums were carried out on PDAs: an inoculum of some granules that had residues of biostimulant microorganisms on the surface and two inoculums, one in suspension and one as is, of the inoculum of biostimulant microorganisms, without organic matrix.

Once the incubation period was over and fungal growth was observed, colony forming unit (CFU) counts were performed.

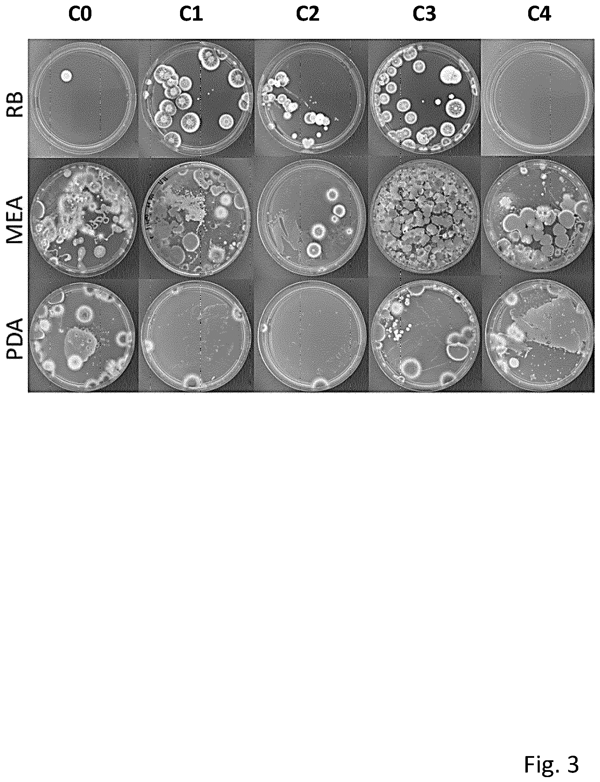

As shown in Figure 3, after one week of incubation, all samples, except sample 4 grown on RB medium, showed conspicuous fungal growth.

As a result of the calculations carried out, it was found that the order of magnitude of colony-forming units per gram of sample (CFU/g) is always 10⁴ (see Table 2), thus indicating that the biostimulant microorganisms incorporated in the product of the invention remain viable.

**Table 2**

| Sample | LTFC/g |
|---|---|
| 0 | 1,6 x 10⁴ |
| 1 | 2,7 x 10⁴ |
| 2 | 1,2 x 10⁴ |
| 3 | 6,3 x 10⁴ |
| 4 | 1,6 x 10⁴ |

To proceed with the isolation of the spores of *Glomus* spp (obligate mycorrhizal fungi that do not grow in culture), 100 grams of sample were suspended in 2 L of sterile water; the suspension obtained was stirred for 1 hour to allow the separation of the greatest number of particles present in the compound. After the stirring time, the samples were decanted for a few minutes, to deposit the coarser parts, and filtered using filters of 500, 190, 110 and 80 µm, sequentially.

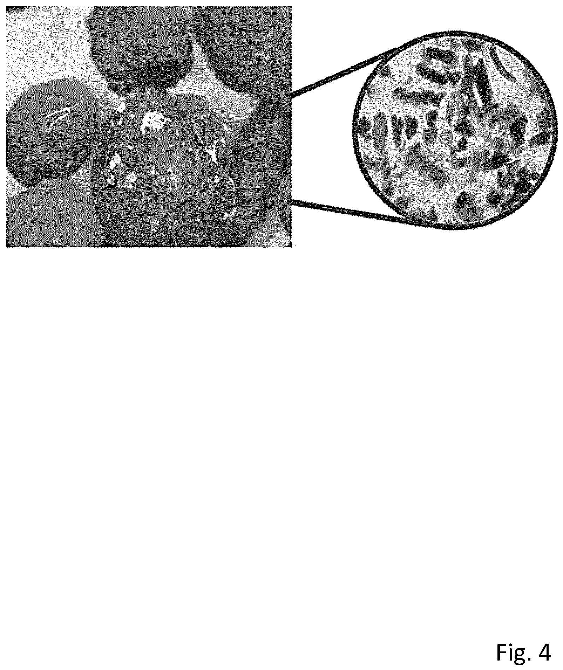

Once the process was complete, the samples were placed in 12 cm diameter petri dishes and observed under a stereomicroscope for spore detection and observation. The analysis of the samples after the filtration process allowed to identify the presence of spores attributable to the genus *Glomus* in sample 2. This structure, as shown in the circle in Figure 4, is intact.

## Claims

1. Biostimulant product in solid form, comprising:
- a dried organic matrix and
- an inoculum of biostimulant microorganisms selected from:
mycorrhizae, fungi, rhizosphere bacteria, and mixtures thereof;
wherein said organic matrix is digestate, optionally composted;
wherein said inoculum of biostimulant microorganisms is incorporated within the organic matrix;
wherein the content of viable microorganisms in the biostimulant product is of at least 1×10⁴UFC/g of biostimulant product.

2. Biostimulant product of claim 1, wherein less than 1% of the inoculum is present on the surface of the biostimulant product.

3. Biostimulant product of any one of claims 1-2, comprising a content of viable microorganisms of 1×10⁴ - 1×10⁶ LTFC/g of biostimulant product.

4. Biostimulant product of any one of claims 1-3, further comprising microorganisms of the organic matrix, different from the biostimulant microorganisms of the inoculum.

5. Biostimulant product of any one of claims 1-4, further comprising humic acids, and/or fulvic acids.

6. Biostimulant product of any one of claims 1-5, wherein the biostimulant microorganisms of the inoculum comprise or consist in: *Glomus spp., Azospirilum Brasilense, Rhizobium pisi, Trichoderma viride, Bacillus amyloliquefaciens, Bacillus subtilis, Pseudomonas putida, Bacillus firmus, Trichoderma harzianum, Metarhizium anisopliae, Beauveria bassiana, Pochonia chlamydosporia,* or mixtures thereof, preferably in the form of spores; more preferably wherein the biostimulant microorganisms of the inoculum comprise or consist in: *Glomus spp., Azospirilum Brasilense, Rhizobium pisi, Trichoderma viride,* or mixtures thereof.

7. Biostimulant product of any one of claims 1-6, wherein said dried organic matrix has a content of residual moisture not greater than 20%, preferably not greater than 15%, more preferably comprised between 5-15%.

8. Biostimulant product of any one of claims 1-7 in the form of granules.

9. Method of producing a biostimulant product comprising:
- providing an organic matrix
- drying said organic matrix at a temperature not greater than 70°C, under high vacuum, and inoculating, in said organic matrix, biostimulant microorganisms selected from mycorrhizae, fungi, rhizosphere bacteria, and mixtures thereof;
wherein said organic matrix is digestate, optionally composted;
wherein said inoculated biostimulant microorganisms are incorporated in the organic matrix;
- optionally granulating the dried organic matrix.

10. Method of claim 9 wherein the phase of drying said organic matrix comprises heating said organic matrix at a temperature between 30°C and 65°C.

11. Method of any one of claims 9-10, wherein the phase of inoculating the microorganisms in said organic matrix precedes the phase of drying said organic matrix.

12. Method of any one of claims 9-11, further comprising granulation of the dried organic matrix.

13. Method of claim 12, wherein the phase of granulation is subsequent to the phase of inoculating the biostimulant microorganisms in said organic matrix.

14. Biostimulant product of any one of claims 1-8, or method of any one of claims 9-13, wherein said organic matrix is a solid fraction of digestate.

15. Biostimulant product of any one of claims 1-8, or method of any one of claims 9-13, wherein said organic matrix is compost of digestate, or of a solid fraction thereof.
